# EUROPÄISCHE PATENTSCHRIFT

(11) **EP 2 590 897 B1**
(45) Veröffentlichungstag und Bekanntmachung des Hinweises auf die Patenterteilung: **04.10.2017**
(21) Anmeldenummer: 11727958.8
(22) Anmeldetag: 16.06.2011
(51) Int. Cl.: C01B 32/30, C01B 32/342, H01G 11/34

(54) **HOCHREINER PORÖSER KOHLENSTOFF FÜR DOPPELSCHICHTKONDENSATOREN**
HIGH-PURITY POROUS CARBON FOR DOUBLE-LAYERED CAPACITORS
CARBONE POREUX DE HAUTE PURETÉ POUR CONDENSATEURS À DOUBLE COUCHE

(30) Priorität: 06.07.2010 DE 102010031012
(43) Veröffentlichungstag der Anmeldung: 15.05.2013
(73) Patentinhaber: Corning Incorporated, Corning, New York 14831 (US)
(72) Erfinder: KIRSCHBAUM, Thomas, Dr., 86485 Biberbach (DE)
(74) Vertreter: Sturm, Christoph
(86) Internationale Anmeldenummer: PCT/EP2011/060007
(87) Internationale Veröffentlichungsnummer: WO 2012/004102

(56) Entgegenhaltungen:
- EP-A1- 1 142 831
- EP-A1- 1 498 389
- WO-A1-2011/110543
- US-A- 2 369 139
- WANG Y X ET AL: "Preparation of porous carbon derived from mixtures of furfuryl resin and glycol with controlled pore size distribution", CARBON, ELSEVIER, OXFORD, GB, Bd. 41, Nr. 11, 1. Januar 2003 (2003-01-01), Seiten 2065-2072, XP004442863, ISSN: 0008-6223, DOI: 10.1016/S0008-6223(03)00196-9

## Beschreibung

Die vorliegende Erfindung betrifft ein Verfahren zur Herstellung von aktiviertem porösen Kohlenstoff.

Aktivierter Kohlenstoff bzw. Aktivkohle wird aufgrund seiner hohen Porosität vorwiegend als Adsorptionsmaterial insbesondere zur Entfernung von unerwünschten Farbstoffen, Geschmacksstoffen und/oder Geruchsstoffen aus Gasen und Flüssigkeiten, beispielsweise bei der Abwasserreinigung oder bei der Luftreinigung, eingesetzt. Dabei kann der aktivierte Kohlenstoff je nach Anwendung in der Form von Granulat, Pulver oder Pellet eingesetzt werden.

Abgesehen davon findet aktivierter Kohlenstoff ebenfalls aufgrund seiner hohen Porosität Anwendung als Elektrodenmaterial, beispielsweise in Superkondensatoren, welche aufgrund ihrer großen Energiedichte zunehmend an Bedeutung gewinnen. Solche Superkondensatoren sind aus zwei voneinander durch einen Separator getrennten, jeweils mit Elektrolyt benetzten Elektroden aufgebaut. In Superkondensatoren wird typischerweise als Elektrodenmaterial mit Aktivkohle beschichtete Aluminiumfolie eingesetzt.

Ein wesentliches Funktionsprinzip der Superkondensatoren beruht auf der elektrischen Energiespeicherung durch Ladungstrennung, d.h. es sollen keine Redox-Prozesse bei den Lade- und Entladevorgängen stattfinden. Ist nun die Aktivkohle durch Fremdionen (Anionen oder Kationen) verunreinigt, können aufgrund eines erhöhten Leckstroms des Kondensators korrosive Prozesse ablaufen, die z.B. den verwendeten Elektrolyt zersetzen, dessen Abbauprodukte (bei fluoridhaltigen Leitsalzen z.B. Flußsäure) dann die Aluminiumfolie zersetzen oder gar die Aluminiumfolie direkt durch anodische Korrosionsprozesse geätzt wird und dadurch ein Ablösen der Aktivkohleschicht von dem Stromkollektor (Aluminiumfolie) und zu Kapazitätsverlusten während des Betriebes des Superkondensators führt.

Insbesondere die Kationen Kupfer (Cu II) und Eisen (Fe III) wirken stark korrosiv auf Aluminium. Besonders aggressiv wirken die Anionen Chlorid, Nitrat, Sulfid, Formiat und Acetat. Aluminiumionen gehen chemische Verbindungen mit diesen aggressiven Anionen ein, die sukzessive aus dem Medium herausgelöst werden.

Aktivkohle für Superkondensatoren benötigt daher besondere Reinheit. Quelle für Verunreinigungen in der Aktivkohle können zum einen in dem Rohstoff (z. B. Biomaterialien wie Kokosnussschale) begründet sein, oder durch die Aktivierungsmethode bedingt (z.B. Aktivierung mittels Alkalielementen) sein.

Aktivierter Kohlenstoff wird in EP 1103523 mit konzentrierter Schwefelsäure, rauchender Schwefelsäure, verdünnter Salpetersäure, Phosphorsäure, Polyphosphorsäure, Pyrophosphorsäure, Metaphosphorsäure und Sulfonsäuren behandelt. In JP2008303083 wird Kohlendioxid in eine Waschlösung für aktivierten Kohlenstoff eingeleitet und dadurch ein Reinigungseffekt erzielt. EP1526114 verwendet Waschschritte mit Wasser und konzentrierter Salzsäure, in US 2007/0041147 wird nur mit Wasser gewaschen.

Wegen der stark absorptiven Wirkung der Aktivkohle sind diese Reinigungsmethoden jedoch für die Verwendung in empfindlichen Superkondensatoren nur bedingt geeignet, da aggressiv wirkende Ionen nach wie vorhanden sind oder sogar die verwendeten Säuren aufgrund irreversibler Adsorption an den Kohlenstoff zu einer Verunreinigung führen.

EP 1 142 831 A1 offenbart ein Verfahren zur Herstellung von aktiviertem, porösen Kohlenstoff, welches die nachfolgenden Schritte umfasst: a) Herstellen einer Mischung aus einem Grünkoks, und einer Base, b) Verpressen der in dem Schritt a) hergestellten Mischung zu einem Pressling, c) Aktivieren des in dem Schritt b) hergestellten Pressling.

Weiterer Stand der Technik ist aus EP 1 498 389 A1 und WO 2011/110543 A1 bekannt.

Aufgabe ist daher, auf Metall insbesondere Aluminium während des Betriebes des Superkondensators korrosiv wirkende Verunreinigungen möglichst vollständig aus der Aktivkohle zu entfernen, wodurch diese hervorragend zur Verwendung als Elektrodenmaterial in Doppelschichtkondensatoren geeignet ist und zu Doppelschichtkondensatoren führt, welche eine besonders hohe Energiedichte speichern können.

Erfindungsgemäß wird diese Aufgabe durch ein Verfahren zur Herstellung von aktiviertem, porösem Kohlenstoff gelöst, welches die nachfolgenden Schritte umfasst: a) Herstellen einer Mischung aus einem Grünkoks, einer Base und einem gegenüber der Base chemisch inerten, hydrophilen Polymer, wobei die Mischung 20 bis 50 Gew.-% Grünkoks, 1 bis 15 Gew.-% hydrophiles Polymer und 35 bis 79 Gew.-% Base enthält, b) Verpressen der in dem Schritt a) hergestellten Mischung zu einem Pressling, c) Aktivieren des in dem Schritt b) hergestellten Presslings, und d) Waschen des Presslings mit einer Lösung von Zitronensäure, besonders bevorzugt verdünnter Zitronensäure.

Vorzugsweise wird in dem Schritt a) eine Mischung hergestellt, welche 25 bis 40 Gew.-% Grünkoks, 2 bis 10 Gew.-% hydrophiles Polymer und 50 bis 73 Gew.-% Base, besonders bevorzugt 30 bis 35 Gew.-% Grünkoks, 3 bis 7 Gew.-% hydrophiles Polymer und 58 bis 67 Gew.-% Base enthält.

Vorzugsweise werden die Verfahrensschritte a), b), c) und d) unmittelbar hintereinander, d.h. ohne weitere Zwischenschritte durchgeführt, d.h. die in dem Verfahrensschritt a) hergestellte Mischung und auch der in dem Verfahrensschritt b) hergestellte Pressling werden ohne Zwischenschritt, insbesondere ohne Dehydratisierungsschritt und/oder Granulierungsschritt, dem Verfahrensschritt b) bzw. dem Verfahrensschritt c) unterworfen. Dadurch kann mit Verfahrensschritt d) auf einfache, schnelle und kostengünstige Weise aktivierter Kohlenstoff mit den zuvor beschriebenen vorteilhaften Eigenschaften hergestellt werden.

Grundsätzlich können in dem Verfahrensschritt a) alle Basen eingesetzt werden, welche für eine oxidative chemische Aktivierung von Kohlenstoff geeignet sind, wobei für diesen Zweck insbesondere Alkalimetallhydroxide und Alkalimetallcarbonate geeignet sind, wie bevorzugt Lithiumhydroxid, Natriumhydroxid, Natriumcarbonat und Kaliumcarbonat und ganz besonders bevorzugt Kaliumhydroxid.

Auch die Base wird, sofern diese, was bevorzugt ist, bei Raumtemperatur ein Feststoff ist, vorzugsweise als Pulver zugegeben, wobei der durchschnittliche Partikeldurchmesser der Base bevorzugt zwischen 0,1 und 1.000 µm und besonders bevorzugt zwischen 0,5 und 100 µm beträgt.

Prinzipiell können in dem Verfahrensschritt a) alle Arten von Grünkoks eingesetzt werden, also alle Arten von nicht calciniertem Koks mit 10 bis 15 % volatilen Anteilen, wie isotropischer Koks, Elektrodenkoks und Nadelkoks, wobei pulverförmiger Grünkoks mit einem durchschnittlichen Partikeldurchmesser zwischen 0,1 und 1.000 µm besonders bevorzugt ist.

Der konkret bevorzugte Partikeldurchmesser des in dem Verfahrensschritt a) eingesetzten Grünkoks hängt von der Art der späteren Anwendung des aktivierten Kohlenstoffs ab. Während für die Verwendung als Adsorptionsmaterial beispielsweise durchschnittliche Partikeldurchmesser von etwa 500 µm bevorzugt sind, ist für die Verwendung als Elektrodenmaterial ein kleinerer durchschnittlicher Partikeldurchmesser bevorzugt, insbesondere ein durchschnittlicher Partikeldurchmesser zwischen 0,5 und 50 µm und besonders bevorzugt ein durchschnittlicher Partikeldurchmesser zwischen 1 und 10 µm. Wenn der aktivierte Kohlenstoff in einem Doppelschichtkondensator eingesetzt werden soll, beträgt der durchschnittliche Partikeldurchmesser des in dem Verfahrensschritt a) eingesetzten Grünkoks höchst bevorzugt 5 bis 10 µm.

Ferner hat es sich im Rahmen der vorliegenden Erfindung als vorteilhaft erwiesen, wenn der in dem Verfahrensschritt a) eingesetzte pulverförmige Grünkoks keine oder nur eine sehr geringe Porosität von kleiner als 10m²/g aufweist.

Grundsätzlich können die einzelnen Komponenten in dem Verfahrensschritt a) in jedem beliebigen Verhältnis zueinander eingesetzt werden, wobei durch den Basengehalt der Grad der Aktivierung des Kohlenstoffs eingestellt wird mit der Maßgabe, dass ein höherer Basengehalt in der in dem Verfahrensschritt a) hergestellten Mischung eine größere spezifische Oberfläche des aktivierten Kohlenstoffs bedingt.

Unter dem in dem Verfahrensschritt a) des Verfahrens eingesetzten hydrophilen Polymer wird im Sinne der vorliegenden Erfindung ein bei 23°C flüssiges Polymer mit einer Löslichkeit in Wasser bei 23°C von mindestens 10 g/l verstanden oder ein bei 23°C festes Polymer mit einem Kontaktwinkel gegenüber Wasser von weniger als 90°. Zudem umfasst der Begriff Polymer im Sinne der vorliegenden Erfindung neben Polymeren im engeren Sinne auch Oligomere.

Unter einem gegenüber der eingesetzten Base chemisch inertem Polymer wird im Sinne der vorliegenden Erfindung ein Polymer verstanden, welches mit der Base nicht reagiert und insbesondere keine Zersetzung, insbesondere keine Kettenverkürzung erleidet, wenn sich dieses für 24 Stunden bei 200°C in Kontakt mit der Base befindet. Zudem erleidet das chemisch inerte Polymer vorzugsweise keinen Verlust der bindenden Eigenschaften, wenn sich dieses für 24 Stunden bei 200°C in Kontakt mit der Base befindet.

Erfindungsgemäß kann in dem Verfahrensschritt a) jedes gegenüber der eingesetzten Base chemisch inerte, hydrophile Oligomer oder Polymer eingesetzt werden. Gute Ergebnisse werden beispielsweise erzielt, wenn als hydrophiles Polymer ein Polyether oder bevorzugt ein Polyetherpolyol eingesetzt wird.

In Weiterbildung des Erfindungsgedankens wird es vorgeschlagen, in dem Verfahrensschritt a) als hydrophiles Polymer ein Polyetherpolyol gemäß der allgemeinen Formel I einzusetzen:

HO(-R-O-)ₙH (I),

worin
n eine ganze Zahl zwischen 2 und 100.000, bevorzugt zwischen 2 und 1.000 und besonders bevorzugt zwischen 100 und 600 ist und
R eine geradkettige oder verzweigtkettige, ggf. mit einer oder mehreren Hydroxylgruppe(n) substituierte Alkylengruppe, bevorzugt eine ggf. mit einer oder mehreren Hydroxylgruppe(n) substituierte C₁-C₁₅-Alkylengruppe und besonders bevorzugt eine ggf. mit einer oder mehreren Hydroxylgruppe(n) substituierte C₁-C₁₀-Alkylengruppe ist. Alle diese Polyetherpolyole sind gegenüber gängigen Basen chemisch inert und weisen eine für das Verfahren ausreichende Hydrophilizität auf.

Besonders bevorzugte Polyetherpolyole gemäß der allgemeinen Formel I sind solche mit einer C₁-C₆-Alkylengruppe, welche ggf. mit einer oder mehreren Hydroxylgruppe(n) substituiert ist, als Rest R, also solche ausgewählt aus der Gruppe bestehend aus Polymethylenglykol, Polyethylenglykol, Polypropylenglykol, Polybutylenglykol, Polypentylenglykol, Polyhexylenglykol, Polyglycerinen und beliebigen Mischungen von zwei oder mehr der vorgenannten Verbindungen. Für die vorliegende Erfindung besonders geeignete Polyglycerine sind Verbindungen gemäß der allgemeinen Formel II: 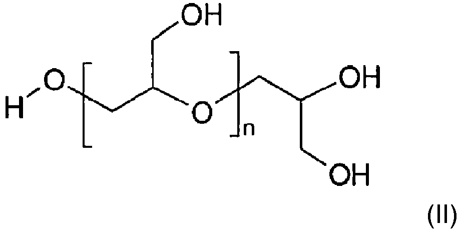 worin
n eine ganze Zahl zwischen 2 und 100.000, bevorzugt zwischen 2 und 1.000 und besonders bevorzugt zwischen 100 und 600 ist.

Gemäß einer weiteren besonders bevorzugten Ausführungsform der vorliegenden Erfindung wird in dem Verfahrensschritt a) als hydrophiles Polymer Polypropylenglykol und/oder Polyethylenglykol eingesetzt, wobei sich insbesondere flüssiges Polypropylenglykol und/oder Polyethylenglykol und insbesondere Polyethylenglykol mit einem gewichtsgemittelten Molekulargewicht (Mw) von 200 bis 600 g/mol als besonders geeignet erwiesen hat. Wenn festes Polypropylenglykol und/oder Polyethylenglykol eingesetzt wird, wird dieses vorzugsweise als feines Pulver mit einem durchschnittlichen Partikeldurchmesser zwischen 0,1 und 1.000 µm, besonders bevorzugt mit einem durchschnittlichen Partikeldurchmesser zwischen 0,5 und 50 µm und ganz besonders bevorzugt mit einem durchschnittlichen Partikeldurchmesser zwischen 1 und 10 µm eingesetzt, damit das feste Polypropylenglykol und/oder Polyethylenglykol homogen mit dem Grünkoks vermischt werden kann. Im Einklang mit der üblichen Definition dieses Parameters wird unter einem durchschnittlichen Partikeldurchmesser der d₅₀-Wert verstanden, also der Wert des Partikeldurchmessers, den 50% der vorliegenden Partikel unterschreiten, d.h. 50% aller vorliegenden Partikel haben einen kleineren Partikeldurchmesser als der d₅₀-Wert.

Insbesondere in dem Fall, dass in dem Verfahrensschritt a) ein flüssiges hydrophiles Polymer eingesetzt ist, ist es bevorzugt, um ein Lösen der Base in dem Polymer zu vermeiden, zunächst das hydrophile Polymer mit dem Grünkoks zu vermischen, bevor anschließend die Base zu der so hergestellten Mischung zugegeben und mit dieser vermischt wird. Vorzugsweise wird hierfür als Mischer ein Intensivmischer eingesetzt.

In dem Verfahrensschritt b) wird erfindungsgemäß die in dem Verfahrensschritt a) hergestellte Mischung zu einem Pressling verpresst. Unter einem Pressling wird im Sinne der vorliegenden Erfindung ein Presskörper verstanden, welcher eine längste Ausdehnung, d.h. in dem Fall eines zumindest im Wesentlichen kugelförmigen Pressling einen Durchmesser oder in dem Fall eines Polygons eine Länge, von wenigstens 50 mm, bevorzugt von wenigstens 100 mm, besonders bevorzugt von wenigstens 1 cm und ganz besonders bevorzugt von wenigstens 10 cm aufweist. Ein Beispiel hierfür ist ein quaderförmiger Pressling mit einer Länge und Breite von je ca. 50 cm.

Grundsätzlich kann das Verpressen in dem Verfahrensschritt b) bei jedem geeigneten Pressdruck vorgenommen werden, wobei mit steigendem Druck die Dichte des Presslings ansteigt und deshalb die maximale Ofenbeladung beim Aktivieren erhöht wird. Aus diesem Grund wird das Verpressen in dem Verfahrensschritt b) vorzugsweise so durchgeführt, dass die in dem Verfahrensschritt a) hergestellte Mischung zu einem Pressling mit einer Dichte von wenigstens 1 g/cm³, bevorzugt mit einer Dichte von wenigstens 1,25 g/cm³, besonders bevorzugt mit einer Dichte von wenigstens 1,5 g/cm³ und ganz besonders bevorzugt mit einer Dichte von wenigstens 1,7 g/cm³ verpresst wird.

Mit einem Pressdruck von 100 kg/cm² kann beispielsweise ein Pressling mit einer Dichte von etwa 1 g/cm³ hergestellt werden, wohingegen mit einem Pressdruck von 5 Tonnen/cm² Presslinge mit einer Dichte von etwa 1,7 g/cm³ hergestellt werden können. Aus diesem Grund wird das Verpressen in dem Verfahrensschritt b) bevorzugt in einer Matrizenpresse bei einem Druck von wenigstens 100 kg/cm² durchgeführt.

Für den Erfolg der Wärmebehandlung gemäß dem Verfahrensschritt c) sind in erster Linie die während der Wärmebehandlung erreichte Maximaltemperatur und die Haltezeit dieser Maximaltemperatur wichtig. Erfindungsgemäß wird die Wärmebehandlung des Presslings in dem Verfahrensschritt c) bei einer Maximaltemperatur von 500 bis 1.500 °C durchgeführt, wobei diese bevorzugt auf 700 bis 1.000 °C, besonders bevorzugt auf 700 bis 900 C und ganz besonders bevorzugt auf 850 bis 900 C eingestellt wird.

Dabei ist es bevorzugt, dass die Maximaltemperatur für wenigstens 0,5 Stunden, besonders bevorzugt für wenigstens 1 Stunde, ganz besonders bevorzugt für wenigstens 2 Stunden und höchst bevorzugt für wenigstens 3 Stunden gehalten wird.

Die bevorzugte Aufheizrate hängt von der Materialmenge in dem Ofen ab, wobei zur gleichmäßigen Erwärmung großer Materialmengen niedrigere Aufheizraten zweckmäßig sind als zur gleichmäßigen Erwärmung kleiner Materialmengen. In Abhängigkeit von der Materialmenge in dem Ofen werden grundsätzlich gute Ergebnisse erzielt, wenn die Aufheizrate 1 bis 100 C/Min, bevorzugt 2 bis 50 C/Min und besonders bevorzugt 5 bis 25 °C/Min. beträgt.

In Weiterbildung des Erfindungsgedankens wird es vorgeschlagen, den Pressling in dem Verfahrensschritt c) nach dem Halten bei Maximaltemperatur schnell auf Raumtemperatur abzukühlen, was zweckmäßigerweise derart erfolgen kann, dass der Pressling zunächst in dem Ofen bis auf ungefähr 150 °C abgekühlt wird, bevor der Pressling dann bevorzugt in Wasser abgeschreckt wird.

Der aktivierte Pressling wird nach der Wärmebehandlung in einem Verfahrensschritt d) gewaschen, um Verunreinigungen aus dem aktivierten Kohlenstoff zu entfernen. Dabei umfasst der Waschvorgang vorzugsweise wenigstens einen Waschschritt mit Zitronensäure, gefolgt von Waschen mit destilliertem Wasser bis zur Neutralität.

Ein weiterer Gegenstand der vorliegenden Erfindung ist die Verwendung des zuvor beschriebenen aktivierten Kohlenstoffs als Adsorptionsmaterial oder als Elektrode und bevorzugt als Elektrode in einem Doppelschichtkondensator

Mit dem erfindungsgemäßen Verfahren kann insbesondere auch aufgrund des Einsatzes von Grünkoks überraschenderweise aktivierter, poröser Kohlenstoff hergestellt werden, welcher ausschließlich oder zumindest nahezu ausschließlich Mikroporen aufweist. Der aktivierte Kohlenstoff zeichnet sich durch eine hohe spezifische Kapazität und eine hohe volumetrische Kapazität aus. Nach dem anschließenden Zitronensäure Waschschritt entsteht so ein aktivierter Kohlenstoff, welcher vortrefflich als Elektrodenmaterial in einem Doppelschichtkondensator eingesetzt werden kann.

Ein weiterer Vorteil dieses Verfahrens liegt darin, dass bei diesem die Bildung und Verteilung von Reduktionsprodukt der Base, wie dampfförmiges Kalium, in der Vorrichtung, in welcher die Aktivierung durchgeführt wird, zuverlässig vermieden wird. Dies liegt zum einen daran, dass während und nach der Aktivierung kein Pulver, sondern ein Pressling gehandhabt wird, welcher im Vergleich zu Pulver eine geringe Oberfläche pro Gewicht aufweist, so dass aus diesem während den bei der Aktivierung herrschenden Temperaturen kein Kaliumdampf heraustritt. Zudem wird durch den Zusatz des hydrophilen Polymers bei dem Verpressen der Mischung ein insbesondere auch während den bei der Aktivierung herrschenden hohen Temperaturen formstabiler dichter Pressling erhalten, weil das Polymer überraschenderweise als Bindemittel wirkt, also die Grünkokspartikel und Basenpartikel miteinander verklebt. Aus diesem Grund wird ein Auseinanderfallen des Presslings auch während der hohen bei der Aktivierung herrschenden Temperaturen zuverlässig verhindert. Durch die stabilen Presslinge wird während der Aktivierung ein inniger Kontakt der Reagenzien ermöglicht und dadurch wird während der Aktivierung eine höhere Reaktivität bzw. eine hohe Ausnutzung der eingesetzten Base erreicht, so dass bei diesem Verfahren nur eine vergleichsweise geringe Menge an Base eingesetzt werden muss. Ferner muss bei diesem Verfahren die Aktivierung nicht unter einem Gasstrom, wie Stickstoffstrom, erfolgen; vielmehr erfolgt die Inertisierung während der Aktivierung durch die Pyrolysegase von dem Grünkoks und dem hydrophilen Polymer selbständig, so dass in der Vorrichtung vorliegender Kaliumdampf nicht in der Vorrichtung verteilt werden kann. Daher kann eine Korrosion der Vorrichtung, in welcher die Aktivierung durchgeführt wird, vermieden werden. Ein weiterer Vorteil dieses Verfahrens liegt in der frei wählbaren Größe des Presslings, was dem Verfahren eine große Flexibilität verleiht. Zudem können mit diesem Verfahren insbesondere auch sehr große Platten hergestellt werden, was eine effektive Beladung des Ofenraums ermöglicht.

### Beispiel: Waschung von KOH aktiviertem Material

Nach Waschung wird die Mischung Koks/KOH bei Raumtemperatur entnommen und mit destilliertem Wasser gequencht.

Danach erfolgt dreimaliges Waschen mit destilliertem Wasser unter Rückfluss bis zur Neutralität. Dafür werden 20 kg Koks/KOH Gemisch in 60 Liter Wasser dispergiert und unter Rühren 30 min unter Rückfluss erhitzt. Anschließend erfolgt dreimaliges Waschen in 1% Zitronensäure unter Rückfluss.

Abschließend wird die Mischung durch dreimaliges Kochen für jeweils 30 min in destilliertem Wasser bis zur Neutralität gewaschen.

### Vergleich der Proben A (Waschen mit 1% Zitronensäure, jeweils 30 min) und B (Waschen mit 10 % HCl, mehrere Stunden)

Für die Proben A und B wurde gleiches Rohmaterial (Sasol) mit KOH Aktivierung verwendet:

### Probe A Elementaranalyse:

C(%) 95,6; N(%) <0,10; H(%) 0,11
Chlorid (ppm) 13; wasserlöslich 2
S (ppm) 34; wasserlöslich 5

### Probe B Elementaranalyse:

C(%) 91,8; N(%) 0,21; H(%) 0,18
Chlorid (ppm) 408; wasserlöslich 41
S (ppm) 52; wasserlöslich 7

### Probe Ausgangskoks Sasol:

C(%) 88,6; N(%) 2,04; H(%) 3,67
Chlorid (ppm) 17; wasserlöslich 10
S (ppm) 2068; wasserlöslich 36

Der prozentuale Kohlenstoffwert der Probe A ist z.B. deutlich größer (95,6 %) als der Wert der Probe B (91,8 %). Dieser größere Wert entspricht einer höheren Reinheit der Probe A. Ferner ist z.B. der Schwefelwert der Probe A signifikant geringer (34 ppm) als der Schwefelwert der Probe B (52 ppm). Dieser niedrigere Wert entspricht einer geringeren Verunreinigung.

### Emissionsspektrometrie (ICP)-Analyse:

### Probe A in ppm

Ag <0,1; AI 2,8; Ca 7,9; Cr 14,3; Cu <0,1; Fe 24,9; K 61,6; Mg 5,8; Na 6,2; Ni 0,7; P 3,7; Si 8,9; Zn 0,2; Aschewert: 0,03%

### Probe B in ppm

Ag <0,1; AI 3,3; Ca 13; Cr 28,8; Cu 1,7; Fe 126; K 157; Mg 5,2; Na 9,2; Ni 2; P 2,5; Si 46,6; Zn 2,5; Aschewert 0,07%

### Probe Ausgangskoks Sasol in ppm

Ag <0,1; AI 175; Ca 49; Cr 104; Cu 2,4; Fe 751; K 28,7;Mg 15,6; Na 39,7; Ni 8,3 P 22,9; Si 77,6; Zn 2,9; Aschewert 0,22%

Auch bei der ICP-Analyse ist beim Waschen mit Zitronensäure (1%) ein überraschend höherer Reinigungseffekt gegenüber Waschen mit HCl (10%) festzustellen. Bei Probe A ist z.B. der Wert für Fe mit 24,9 ppm oder der Wert für Si mit 8,9 ppm deutlich geringer als bei der Probe B (Fe 126 ppm und Si 77,6 ppm).

## Patentansprüche

1. Verfahren zur Herstellung von aktiviertem, porösen Kohlenstoff, welches die nachfolgenden Schritte umfasst:
a) Herstellen einer Mischung aus einem Grünkoks, einer Base und einem gegenüber der Base chemisch inerten, hydrophilen Polymer, wobei die Mischung 20 bis 50 Gew.-% Grünkoks, 1 bis 15 Gew.-% hydrophiles Polymer und 35 bis 79 Gew.-% Base enthält,
b) Verpressen der in dem Schritt a) hergestellten Mischung zu einem Pressling,
c) Aktivieren des in dem Schritt b) hergestellten Presslings, und
d) Waschen des Presslings mit einer Lösung von Zitronensäure, besonders bevorzugt verdünnter Zitronensäure.

2. Verfahren nach Anspruch 1, **dadurch gekennzeichnet, dass** in dem Schritt a) als hydrophiles Polymer ein Polyether, bevorzugt ein Polyetherpolyol und besonders bevorzugt ein Polyetherpolyol gemäß der allge-meinen Formel I eingesetzt wird:
HO(-R-0-)ₙH (I)
worin
n eine ganze Zahl zwischen 2 und 100.000, bevorzugt zwischen 2 und 1.000 und besonders bevorzugt zwischen 100 und 600 ist und R eine geradkettige oder verzweigtkettige, ggf. mit einer oder mehreren Hydroxylgruppe(n) substituierte Alkylengruppe, bevorzugt eine ggf. mit einer oder mehreren Hydroxylgruppe(n) substituierte C₁-C₁₅-Alkylengruppe, besonders bevorzugt eine ggf. mit einer oder mehreren Hydroxylgruppe(n) substituierte C₁-C₁₀-Alkylengruppe und ganz besonders bevorzugt eine ggf. mit einer oder mehreren Hydroxylgruppe(n) substituierte C₁-C₆-Alkylengruppe ist.

3. Verfahren nach Anspruch 2, **dadurch gekennzeichnet, dass** in dem Schritt a) als hydrophiles Polymer ein Polymer eingesetzt wird, welches aus der Gruppe ausgewählt wird, welche aus Polymethylenglykol, Polyethylenglykol, Polypropylenglykol, Polybutylenglykol, Polypentylenglykol, Polyhexylenglykol, Polyglycerinen und beliebigen Mischungen von zwei oder mehr der vorgenannten Verbindungen besteht, und insbesondere bevorzugt Polypropylenglykol mit einem gewichtsgemittelten Molekulargewicht von 200 bis 600 g/mol und/oder Polyethylenglykol mit einem gewichtsgemittelten Molekulargewicht von 200 bis 600 g/mol eingesetzt wird.

4. Verfahren nach zumindest einem der Ansprüche 1 bis 3, **dadurch gekennzeichnet, dass** in dem Schritt a) zunächst das hydrophile Polymer mit dem Grünkoks vermischt wird, bevor anschließend die Base zu der so hergestellten Mischung zugegeben und mit dieser vermischt wird.

5. Verfahren nach zumindest einem der Ansprüche 1 bis 4, **dadurch gekennzeichnet, dass** in dem Schritt a) eine Mischung hergestellt wird, welche 25 bis 40 Gew.-% Grünkoks, 2 bis 10 Gew.-% hydrophiles Polymer und 50 bis 73 Gew.-% Base, besonders bevorzugt 30 bis 35 Gew.-% Grünkoks, 3 bis 7 Gew.-% hydrophiles Polymer und 58 bis 67 Gew.-% Base enthält.

6. Verfahren nach zumindest einem der Ansprüche 1 bis 5, **dadurch gekennzeichnet, dass** das Verpressen in dem Schritt b) in einer Matrizenpresse bei einem Druck von wenigstens 100 kg/cm² durchgeführt wird und/oder in dem Schritt b) die in dem Schritt a) hergestellte Mischung zu einem Pressling mit einer Dichte von wenigstens 1 g/cm³ verpresst wird.

7. Verfahren nach zumindest einem der Ansprüche 1 bis 6, **dadurch gekennzeichnet, dass** das Aktivieren in dem Schritt c) ein Wärmebehandeln des Presslings bei einer Temperatur von 500 bis 1.500 °C, bevorzugt von 700 bis 1.000 , besonders bevorzugt von 700 bis 900°C und ganz besonders bevorzugt von 850 bis 900 umfasst und vorzugsweise die Maximaltemperatur bei dem Wärmebehandeln in dem Schritt c) für wenigstens 0,5 Stunden, bevorzugt für wenigstens 1 Stunde, besonders bevorzugt für wenigstens 2 Stunden und ganz besonders bevorzugt für wenigstens 3 Stunden gehalten wird.

## Claims

1. Process for production of activated porous carbon, said process comprising the steps of:
a) producing a mixture from a green coke, a base and a hydrophilic polymer that is chemically inert to said base, wherein the mixture contains 20 to 50 wt% of green coke, 1 to 15 wt% of hydrophilic polymer and 35 to 79 wt% of base,
b) pressing the mixture obtained in step a) to form a compact,
c) activating the compact obtained in step b), and
d) washing the compact with a solution of citric acid, more preferably dilute citric acid.

2. Process according to Claim 1, **characterized in that** the hydrophilic polymer used in step a) is a polyether, preferably a polyether polyol and more preferably a polyether polyol of general formula I:
HO(-R-0-)ₙH (I)
where
n is an integer between 2 and 100 000, preferably between 2 and 1000 and more preferably between 100 and 600 and R is a straight-chain or branched-chain alkylene group optionally substituted with one or more hydroxyl groups, preferably a C₁-C₁₅ alkylene group optionally substituted with one or more hydroxyl groups, more preferably a C₁-C₁₀ alkylene group optionally substituted with one or more hydroxyl groups and most preferably a C₁-C₆ alkylene group optionally substituted with one or more hydroxyl groups.

3. Process according to Claim 2, **characterized in that** the hydrophilic polymer used in step a) is a polymer selected from the group consisting of polymethylene glycol, polyethylene glycol, polypropylene glycol, polybutylene glycol, polypentylene glycol, polyhexylene glycol, polyglycerols and any mixtures of two or more thereof, and more preferably polypropylene glycol having a weight-averaged molecular weight of 200 to 600 g/mol and/or polyethylene glycol having a weight-averaged molecular weight of 200 to 600 g/mol.

4. Process according to at least one of Claims 1 to 3, **characterized in that** step a) comprises first mixing the hydrophilic polymer with the green coke before subsequently the mixture thus obtained is admixed with the base.

5. Process according to at least one of Claims 1 to 4, **characterized in that** step a) comprises producing a mixture containing 25 to 40 wt% of green coke, 2 to 10 wt% of hydrophilic polymer and 50 to 73 wt% of base, more preferably 30 to 35 wt% of green coke, 3 to 7 wt% of hydrophilic polymer and 58 to 67 wt% of base.

6. Process according to at least one of Claims 1 to 5, **characterized in that** step b) comprises pressing in a mould at a pressure of not less than 100 kg/cm² and/or step b) comprises pressing the mixture obtained in step a) into a compact having a density of not less than 1 g/cm³.

7. Process according to at least one of Claims 1 to 6, **characterized in that** step c) comprises activating by heat-treating the compact at a temperature of 500 to 1500°C, preferably of 700 to 1000, more preferably of 700 to 900°C and most preferably of 850 to 900 and preferably step c) comprises heat treating by maintaining the maximum temperature for not less than 0.5 hours, preferably for not less than 1 hour, more preferably for not less than 2 hours and most preferably for not less than 3 hours.

## Revendications

1. Procédé de fabrication de carbone poreux activé, qui comprend les étapes suivantes :
a) la fabrication d'un mélange d'un coke vert, d'une base et d'un polymère hydrophile chimiquement inerte vis-à-vis de la base, le mélange contenant 20 à 50 % en poids de coke vert, 1 à 15 % en poids de polymère hydrophile et 35 à 79 % en poids de base,
b) la compression du mélange fabriqué à l'étape a) en une ébauche comprimée,
c) l'activation de l'ébauche comprimée fabriquée à l'étape b), et
d) le lavage de l'ébauche comprimée avec une solution d'acide citrique, de manière particulièrement préférée de l'acide citrique dilué.

2. Procédé selon la revendication 1, **caractérisé en ce qu'**à l'étape a), un polyéther, de préférence un polyéther-polyol et de manière particulièrement préférée un polyéther-polyol selon la formule générale I est utilisé en tant que polymère hydrophile :
HO(-R-O-)ₙH (I)
dans laquelle
n représente un nombre entier compris entre 2 et 100 000, de préférence entre 2 et 1 000 et de manière particulièrement préférée entre 100 et 600, et R est un groupe alkylène linéaire ou ramifié, éventuellement substitué avec un ou plusieurs groupes hydroxyle, de préférence un groupe alkylène en C₁-C₁₅ éventuellement substitué avec un ou plusieurs groupes hydroxyle, de manière particulièrement préférée un groupe alkylène en C₁-C₁₀ éventuellement substitué avec un ou plusieurs groupes hydroxyle, et de manière tout particulièrement préférée un groupe alkylène en C₁-C₆ éventuellement substitué avec un ou plusieurs groupes hydroxyle.

3. Procédé selon la revendication 2, **caractérisé en ce qu'**à l'étape a), un polymère qui est choisi dans le groupe constitué par le polyméthylène glycol, le polyéthylène glycol, le polypropylène glycol, le polybutylène glycol, le polypentylène glycol, le polyhexylène glycol, les polyglycérines et les mélanges quelconques de deux ou plus des composés susmentionnés est utilisé en tant que polymère hydrophile, et de manière particulièrement préférée le polypropylène glycol ayant un poids moléculaire moyen en poids de 200 à 600 g/mol et/ou le polyéthylène glycol ayant un poids moléculaire moyen en poids de 200 à 600 g/mol.

4. Procédé selon au moins l'une quelconque des revendications 1 à 3, **caractérisé en ce qu'**à l'étape a), le polymère hydrophile est tout d'abord mélangé avec le coke vert avant d'ajouter la base au mélange ainsi fabriqué et de la mélanger avec celui-ci.

5. Procédé selon au moins l'une quelconque des revendications 1 à 4, **caractérisé en ce qu'**à l'étape a), un mélange est fabriqué, qui contient 25 à 40 % en poids de coke vert, 2 à 10 % en poids de polymère hydrophile et 50 à 73 % en poids de base, de manière particulièrement préférée 30 à 35 % en poids de coke vert, 3 à 7 % en poids de polymère hydrophile et 58 à 67 % en poids de base.

6. Procédé selon au moins l'une quelconque des revendications 1 à 5, **caractérisé en ce que** la compression à l'étape b) est réalisée dans une presse matricielle à une pression d'au moins 100 kg/cm² et/ou, à l'étape b), le mélange fabriqué à l'étape a) est comprimé en une ébauche comprimée ayant une densité d'au moins 1 g/cm³.

7. Procédé selon au moins l'une quelconque des revendications 1 à 6, **caractérisé en ce que** l'activation à l'étape c) comprend un traitement thermique de l'ébauche comprimée à une température de 500 à 1 500 °C, de préférence de 700 à 1 000, de manière particulièrement préférée de 700 à 900 °C et de manière tout particulièrement préférée de 850 à 900, et la température maximale lors du traitement thermique à l'étape c) est de préférence maintenue pendant au moins 0,5 heure, de préférence pendant au moins 1 heure, de manière particulièrement préférée pendant au moins 2 heures et de manière tout particulièrement préférée pendant au moins 3 heures.
